# EUROPÄISCHE PATENTSCHRIFT

(11) **EP 2 670 337 B1**
(45) Veröffentlichungstag und Bekanntmachung des Hinweises auf die Patenterteilung: **13.12.2017**
(21) Anmeldenummer: 12706211.5
(22) Anmeldetag: 02.02.2012
(51) Int. Cl.: A61C 1/08

(54) **BOHRSCHABLONE FÜR EIN DENTALES IMPLANTAT UND EIN VERFAHREN ZUR HERSTELLUNG DIESER BOHRSCHABLONE**
DRILLING JIG FOR A DENTAL IMPLANT AND METHOD FOR PRODUCING SAID DRILLING JIG
GABARIT DE FORAGE POUR IMPLANT DENTAIRE ET PROCÉDÉ DE PRODUCTION DE CE GABARIT DE FORAGE

(30) Priorität: 03.02.2011 DE 102011003557
(43) Veröffentlichungstag der Anmeldung: 11.12.2013
(60) Teilanmeldung: 13179734.2
(73) Patentinhaber: Sirona Dental Systems GmbH, 64625 Bensheim (DE)
(72) Erfinder: ORTH, Ulrich, 64646 Heppenheim (DE); SCHNEIDER, Sascha, 64367 Mühltal (DE)
(74) Vertreter: Sommer, Peter
(86) Internationale Anmeldenummer: PCT/EP2012/051724
(87) Internationale Veröffentlichungsnummer: WO 2012/104361

(56) Entgegenhaltungen:
- WO-A1-2005/053566
- WO-A1-2005/053567
- DE-A1-102010 012 960
- GB-A- 2 061 512
- GB-A- 2 246 729
- US-A1- 2004 219 479
- US-A1- 2008 064 005
- US-A1- 2011 111 362

## Beschreibung

### Technisches Gebiet

Die Erfindung betrifft eine Bohrschablone zur Durchführung einer Implantatbohrung für ein dentales Implantat umfassend ein Basisteil mit mindestens einer Durchgangsöffnung und mindestens eine Hülse, wobei eine erste Oberfläche des Basisteils einen Abdruck einer Präparationsstelle aufweist, wobei eine zweite gegenüberliegende Oberfläche des Basisteils eine Auflagefläche aufweist.

### Stand der Technik

Aus dem Stand der Technik sind mehrere Bohrschablonen mit Durchgangsöffnungen und Einsatzhülsen bekannt, um geplante Implantatbohrungen mit einer bestimmten Ausrichtung und einer bestimmten Lage durchzuführen, in die dann zahnärztliche Implantate eingesetzt werden.

Aus der DE 10 2009 008 790 B3 ist eine Bohrschablone mit einer Führungshülse zum Führen eines oralchirurgischen Bohrers offenbart. Der Bohrer kann auch bei minimalen Platzverhältnissen in die Führungshülse eingesetzt werden, wenn diese in ihrer Umfangsfläche ein bezüglich der Hülsenlängenachse schräg verlaufenden Schlitz aufweist. Eine solche Führungshülse erlaubt darüber hinaus eine nahezu optimale Führung des Bohrers in Richtung der geplanten Bohrachse. Die Führungshülse kann über Befestigungsmittel in der Bohrschablone verankert werden. Das Befestigungsmittel kann als Teil eines Wechselmechanismus ausgebildet sein, mittels dessen die Hülse lösbar an einer Halterung befestigt werden kann. Der Wechselmechanismus kann ein konisches Element und eine zugehörige Halterung umfassen, die formschlüssig in Verbindung gebracht werden können.

Das Handbuch "Herstellung und Anwendung einer individuellen Bohrschablone" von der Straumann GmbH offenbart ein Herstellungsverfahren einer Bohrschablone. In einem ersten Schritt wird ein Situationsmodell aus Gips gefertigt. In einem zweiten Schritt wird eine Kunststoffschiene auf das Situationsmodell tiefgezogen. In einem dritten Schritt wird ein zweites Gipsmodell hergestellt, an der geplanten Implantatposition zersägt, das gemessene Knochenprofil übertragen und eine Implantatachse festgelegt. In einem vierten Schritt wird auf dem ursprünglichen Situationsmodell ein Wax-Up der geplanten Restauration hergestellt. In einem fünften Schritt wird ein Duplikat des Wax-Up-Modells hergestellt und eine Kunststoffschiene darauf tiefgezogen. In einem sechsten Schritt wird die neue Kunststoffschiene auf das Situationsmodell übertragen. In einem siebten Schritt wird die ermittelte Implantatposition und Implantatachse auf dem Situationsmodell markiert und mittels eines Parallelometers mit einem Pilotbohrer die Bohrung durchgeführt. In einem achten Schritt wird ein Titanstift in die Bohrung eingesetzt. In einem neunten Schritt wird über dem im Modell steckenden Titanstift eine neue Kunststoffschiene tiefgezogen. In einem zehnten Schritt wird die Kunststoffschiene vom Modell genommen und der Titanstift durch einen kürzeren Titanstift ersetzt. In einem elften Schritt wird die Kunststoffschiene auf das zuvor angefertigte Modell mit eingezeichnetem Knochenprofil gesetzt und die Implantatachse kontrolliert. Bei Bedarf kann die Lage und Richtung der Bohrung noch korrigiert werden. In einem zwölften Schritt wird ein Titanstift mit einer Abstufung in die Bohrung gesteckt und eventuell vorhandene Unterschnitte mit Gips, Wachs oder Kunststoff ausgeblockt. Über den Titanstift mit Abstufung wird eine neue Kunststoffschiene tiefgezogen. Nach Entfernen des Titanstifts mit Abstufung wird eine okklusale Öffnung in die Kunststoffschiene geschnitten oder geschliffen und eine Bohrhülse mit Rand wird in die Kunststoffschiene eingesetzt. Anschließend wird die Kunststoffschiene im Bereich der Implantationsstelle beschliffen oder zugeschnitten. Alternativ dazu kann im neunten Schritt eine Bohrhülse über den Titanstift gestülpt werden und diese Bohrhülse mit Kunststoff oder Gips fixiert werden. Anschließend wird eine Kunststoffschiene über die Bohrhülse tiefgezogen und die Bohröffnung zur Aufnahme des Pilotbohrers freigeschliffen.

DE 199 52 962 A1 offenbart ein Verfahren zur Erstellung einer Bohrhilfe für ein Zahnimplantat, wobei zunächst eine Röntgenaufnahme des Kiefers und danach eine dreidimensionale optische Vermessung der sichtbaren Oberfläche des Kiefers und der Zähne durchgeführt werden. Die Messdatensätze von der Röntgenaufnahme und der dreidimensionalen optischen Aufnahme werden miteinander korreliert. Anhand der vorhandenen Informationen, wie der Art und der Position des Implantats relativ zu den Nachbarzähnen, wird eine Schablone geplant und generiert, die auf den Nachbarzähnen aufliegt und dadurch die exakte Bohrung des Implantatführungslochs ermöglicht wird. Anhand der Röntgendaten kann das Implantat in bekannter Weise bestimmt und positioniert werden. Anhand der gewonnen Informationen über die Oberflächenstruktur, d.h. die Okklusalflächen benachbarter Zähne kann eine Implantatshilfe in Gestalt einer Bohrschablone mittels einer CAD/CAM-Einheit ausgeschliffen werden. Anhand der Messdaten ist eine CAD/CAM-Maschine in der Lage die Bohrschablone mit dem Negativ der Okklusalflächen und einem Führungslauf für den Bohrer zu fertigen. Auf die Bohrschablone wird ein Anschlag übertragen, der die Bohrtiefe bestimmt.

WO 99/32045 A1 offenbart ein Verfahren zur Herstellung einer dentalen Bohrhilfe für Implantate. Zunächst wird unter Verwendung eines Kieferbildes mit Bezug auf eine Abdruckfläche ein dreidimensionales Rechnerbild modelliert. Danach wird die Lage und die Bohrtiefe der Bohrlöcher bestimmt und ein Satz von Implantatbohrlochkoordinaten in eine computergesteuerte Fertigungsmaschine eingespeist. Mittels eines Präzisionswerkzeugs wird im Bohrkörper für jeden der zuvor eingespeisten Bohrlochkoordinatensätze ein Bohrführungssockel vorbereitet mit einer entsprechend der anhand des Kieferabschnitts ermittelten Bohrlochposition und Bohrlochorientierung.

Aus der EP 1 502 556 A2 ist eine Bohrschablone sowie ein Verfahren zur Herstellung dieser Bohrschablone bekannt, wobei die Bohrschablone mindestens ein Durchgangsloch zur Durchführung des Bohrers aufweist, in das mindestens eine erste Führungshülse einsetzbar ist. Die Führungshülse weist in einem unteren Bereich einen Außendurchmesser auf, der im Wesentlichen dem Innendurchmesser des Durchgangslochs entspricht. In einem oberen Bereich weist die Führungshülse einen größeren Außendurchmesser auf, so dass sich der obere Abschnitt auf dem das Durchgangsloch umgebenden Rand der Bohrschablone abstützt.

Aus der WO 2004/076106 A1 ist ein Verfahren sowie eine Vorrichtung zur Überprüfung einer Bohrschablone bekannt, wobei mittels eines in die Bohrhülse eingeführten Messstifts ein Berührungspunkt des Messstifts auf einem zur Bohrschablone beabstandeten Messblatt eingezeichnet wird.

Die WO 2005/053567 A1 offenbart eine Bohrschablone zur Durchführung einer Implantatbohrung für ein dentales Implantat umfassend ein Basisteil mit mindestens einer Durchgangsöffnung und mindestens einer Hülse, wobei eine erste Oberfläche des Basisteils einen Abdruck einer Präparationsstelle aufweist und eine zweite gegenüberliegende Oberfläche des Basisteils eine Auflagefläche aufweist und die Durchgangsöffnung und die Auflagefläche des Basisteils so geformt sind, dass die Hülse in die Durchgangsöffnung zumindest teilweise einsteckbar ist und die Hülse in einem eingesteckten Zustand auf der Auflagefläche aufliegt und in ihrer Lage und Ausrichtung relativ zum Basisteil positioniert ist.

Ein Nachteil dieser Verfahren besteht darin, dass die meisten CAD/CAM-Maschinen in ihren Freiheitsgraden eingeschränkt sind und insbesondere windschief zueinander angeordnete Bohrungen nicht durchführbar sind. Daher ist die Herstellung von Bohrschablonen mittels einer CAD/CAM-Maschine nur für begrenzte Indikationsbereiche möglich. In den meisten Fällen erfolgt die Fertigung der Bohrschablone entweder individuell im Labor oder nach vorheriger CAD/CAM-Planung zentral beispielsweise unter Verwendung eines Hexapods, dessen Konstruktion eine Beweglichkeit des zu bearbeitenden Objekts in allen sechs Freiheitsgraden ermöglicht, und mittels eines Parallelometers zur Durchführung senkrechter Bohrungen. Bei der zentralen Fertigung finden meist CT-DVT Schablonen, Aufbissplatten und Kiefermodelle aus Gips Anwendung. Diese werden auf den aufwendig gestalteten Hexapod montiert und mit Hilfe mehrere Messpunkte eingestellt. Dieser Vorgang ist sehr aufwendig und damit auch fehleranfällig.

Die Aufgabe dieser Erfindung besteht daher darin, ein Verfahren bereitzustellen, das die Herstellung einer beliebigen Bohrschablone insbesondere mit windschiefen Bohrachsen unter Verwendung einer herkömmlichen Fertigungsmaschine mit eingeschränkten Freiheitsgraden ermöglicht.

### Darstellung der Erfindung

Die Erfindung betrifft eine Bohrschablone zur Durchführung einer Implantatbohrung für ein dentales Implantat umfassend ein Basisteil mit mindestens einer Durchgangsöffnung und mindestens eine Hülse. Eine erste Oberfläche des Basisteils weist einen Abdruck einer Präparationsstelle auf, wobei eine zweite gegenüberliegende Oberfläche des Basisteils eine Auflagefläche aufweist. Die Durchgangsöffnung ist ausgehend von der zweiten Oberfläche zur ersten Oberfläche des Basisteils hin aufgeweitet, wobei die Durchgangsöffnung und die Auflagefläche des Basisteils so geformt sind, dass die Hülse in die Durchgangsöffnung zumindest teilweise einsteckbar ist und die Hülse in einem eingesteckten Zustand auf der Auflagefläche aufliegt und in ihrer Lage und Ausrichtung relativ zum Basisteil positioniert ist.

Die zahnmedizinische Bohrschablone kann eine beliebige Bohrschablone, wie eine durch die Nachbarzähne getragene Bohrschablone für minimal invasive Chirurgie sowie eine durch den Kieferknochen getragene Bohrschablone für die sogenannte Open-Flap-Chirurgie, sein.

Die Bohrschablone dient zur Führung eines Bohrers, um die geplante Implantatbohrung zum Ansetzen eines Implantats, wie in einer Implantatplanung errechnet, durchzuführen. An der ersten Oberfläche der Durchgangsöffnung wird die Hülse in die Durchgangsöffnung gesteckt, wobei die innere Fläche der Hülse zur Führung des Bohrers dient. Bei der Implantatplanung kann eine Röntgenaufnahme des Kiefers und eine dreidimensionale optische Vermessung der sichtbaren Oberfläche des Kiefers und der Zähne verwendet werden, um einen Implantattyp und die Implantatlage relativ zum Kiefer virtuell festzulegen. Insbesondere werden die genaue Lage, der relative Winkel zum Kiefer und die Tiefe der Implantatbohrungen zum Einsetzen der Implantate geplant. Die Bohrschablone ist zur Durchführung einer oder mehrerer Implantatbohrungen vorgesehen, die auch windschief zueinander angeordnet sein können. Der Abdruck der Präparationsstelle an der ersten Oberfläche des Basisteils entspricht einem negativen Gegenstück zu der Oberfläche der Präparationsstelle oder auch einem Abdruck der Nachbarzähne der Präparationsstelle. Die aufgeweitete Durchgangsöffnung zwischen der ersten Oberfläche und der zweiten Oberfläche des Basisteils kann beliebig gestaltet sein. Insbesondere kann die Durchgangsöffnung kegelförmig mit einer ovalen oder kreisförmigen Grundfläche ausgebildet sein. Die Hülse kann dabei ein zylindrisches Hülsenteil aufweisen, das in die Durchgangsöffnung hineinpasst. Die Hülse kann ein scheibenförmiges Hülsenteil aufweisen, das im eingesteckten Zustand auf der Auflagefläche des Basisteils aufliegt und dadurch die Lage und Ausrichtung der Hülse relativ zum Basisteil festgelegt ist. Dabei kann der Durchmesser der Durchgangsöffnung größer als der Durchmesser des zylindrischen Hülsenteils sein, so dass die Lage der Hülse allein durch die Auflagefläche definiert wird.

Ein Vorteil der Bohrschablone ist, dass die Durchgangsöffnung aufgeweitet ist und dadurch mittels einer herkömmlichen Bearbeitungsmaschine mit drei oder vier Achsen herausgeschliffen werden kann. Damit kann die Bohrschablone auf eine einfache und schnelle Weise mittels einer beliebigen herkömmlichen Bearbeitungsmaschine mit limitierten Freiheitsgraden direkt in der Zahnarztpraxis hergestellt werden. Damit ist eine Herstellung der Bohrschablone unter Verwendung komplexerer Beareitungsmaschinen anhand von Planungsdaten in einem zentralen Labor nicht mehr notwendig.

Ein weiterer Vorteil der Bohrschablone ist, dass die Ausrichtung und die Lage der Hülse relativ zum Basisteil korrigiert werden kann, falls man bei einer Überprüfung feststellt, dass die gemessenen Werte der Lage und Ausrichtung nicht den durch die Implantatplanung vorgegebenen Soll-Werten entsprechen. Dabei kann eine Korrektur der Auflagefläche in der Bearbeitungsmaschine durchgeführt werden. Bei herkömmlichen Bohrschablonen mit zylinderförmigen Durchgangsbohrungen ist eine solche Korrektur der Ausrichtung und der Lage der Führungsbohrungen nicht mehr möglich.

Die Hülse kann aus Metall und das Basisteil aus einem Kunststoff gefertigt sein, der möglichst leicht zu bearbeiten ist und transparent sein kann.

Vorteilhafterweise kann das Basisteil auf der zweiten Oberfläche einen Anschlag aufweisen, der so ausgebildet ist, dass die Hülse im eingesteckten Zustand auf der Auflagefläche aufliegt und seitlich den Anschlag berührt.

Dadurch wird die Hülse im eingesteckten Zustand seitlich durch den Anschlag begrenzt und damit in ihrer Position fixiert. Der Anschlag kann beispielsweise im Form einer Abstufung mit einem Winkel von 90° gestaltet sein, der als Gegenstück zu dem scheibenförmigen Hülsenteil ausgebildet ist. Der Anschlag kann auch in Form von geraden Flächen herausgearbeitet sein, die Anschlagspunkte an die Hülse im eingesteckten Zustand aufweisen. Der Anschlag kann mittels der Bearbeitungsmaschine mit limitierten Freiheitsgraden mit drei oder vier Achsen herausgeschliffen werden.

Vorteilhafterweise kann eine Mantelfläche der aufgeweiteten Durchgangsöffnung zu einer Achse der Hülse im eingesteckten Zustand einen Öffnungswinkel bilden, der mindestens 15° betragen kann.

Dadurch kann die aufgeweitete Durchgangsöffnung mittels der Bearbeitungsmaschine mit limitierten Freiheitsgraden mit drei oder vier Achsen herausgeschliffen werden. Das Herausschleifen von zylindrischen Bohrungen mit beliebiger Ausrichtung ist mit einer solchen Bearbeitungsmaschine nicht möglich.

Vorteilhafterweise kann die aufgeweitete Durchgangsöffnung kegelförmig sein und an der ersten Oberfläche einen ersten Radius und an der zweiten Oberfläche einen zweiten Radius aufweisen. Die Hülse kann ein scheibenförmiges erstes Hülsenteil und ein zylinderförmiges zweites Hülsenteil mit einem Führungskanal aufweisen, wobei der zweite Radius der Durchgangsöffnung an der zweiten Oberfläche des Basisteils an das zylinderförmige zweite Hülsenteil angepasst sein kann. Der zweite Radius der Durchgangsöffnung kann mindestens so groß wie ein Radius des zweiten Hülsenteils sein.

Dadurch wird die kegelförmige aufgeweitete Durchgangsöffnung passend zum zylinderförmigen zweiten Hülsenteil herausgeschliffen. Das Positionieren der Hülse erfolgt dabei durch das Aufliegen des ersten scheibenförmigen Hülsenteils auf die Auflagefläche. Der zweite Radius der Durchgangsöffnung sollte möglichst dem Radius des zylinderförmigen zweiten Hülsenteils entsprechen, damit die Hülse im eingesteckten Zustand in seitlicher Richtung fixiert ist.

Vorteilhafterweise kann die Hülse ein drittes Hülsenteil mit einem Führungskanal aufweisen, das ausgehend von der Auflagefläche in eine Richtung weg vom Basisteil ausgerichtet ist.

Dadurch kann das zweite Hülsenteil, dass in die Durchgangsöffnung gesteckt wird, in den Abmessungen kleiner ausgeführt sein, wobei der Führungskanal im dritten Hülsenteil so lang bemessen ist, dass eine präzise Führung des Bohrers zur Durchführung der Implantatbohrung gewährleistet ist.

Vorteilhafterweise kann die Hülse vorgefertigt sein. Das Basisteil kann unter Verwendung einer limitierten Bearbeitungsmaschine mit drei oder vier Bearbeitungsachsen herstellbar sein.

Die Hülse kann beispielsweise unter Verwendung einer CAM-Bearbeitungsmaschine mit fünf oder mehr Bearbeitungsachsen vorgefertigt werden. Die Hülse kann auch durch ein Sinterverfahren ein sonstiges Herstellungsverfahren vorgefertigt werden. Es können auch mehrere Hülsen mit unterschiedlichen Führungskanälen für verschiedene Bohrer vorgefertigt werden und in einem Sortiment zur Erstellung der Bohrschablone bereitgestellt werden.

Das Basisteil selbst kann wegen der aufgeweiteten Durchgangsöffnung auch mit einer CAM-Bearbeitungsmaschine mit limitierten Freiheitsgraden hergestellt werden.

Ein weiterer Gegenstand der Erfindung ist ein Verfahren zur Herstellung einer dentalen Bohrschablone, die ein Basisteil mit mindestens einer Durchgangsöffnung und mindestens eine Hülse aufweist. An einer ersten Oberfläche des Basisteils ist dabei bereits ein Abdruck einer Präparationsstelle vorhanden. In einem ersten Schritt wird an einer zweiten gegenüberliegenden Oberfläche des Basisteils eine Auflagefläche ausgearbeitet, die passend zu einem Auflageteil der Hülse geformt wird. In einem zweiten Schritt wird eine Durchgangsöffnung herausgearbeitet, die ausgehend von der zweiten Oberfläche zur ersten Oberfläche des Basisteils hin aufgeweitet wird. Die Durchgangsöffnung und die Auflagefläche des Basisteils werden dabei so ausgearbeitet, dass die Hülse in die Durchgangsöffnung zumindest teilweise einsteckbar ist und die Hülse in einem eingesteckten Zustand über das Auflageteil auf der Auflagefläche aufliegt und in ihrer Lage und Ausrichtung relativ zum Basisteil positioniert ist.

Die Auflagefläche des Basisteils kann beispielsweise ringförmig als Gegenstück zum scheibenförmigen Auflageteil der Hülse ausgestaltet sein. Die Bearbeitung kann in einer Bearbeitungsmaschine mit eingeschränkten Freiheitsgraden mit drei oder vier Achsen erfolgen. Das Herausarbeiten der Durchgangsöffnung kann beispielsweise auch in der limitierten Bearbeitungsmaschine erfolgen. Die aufgeweitete Durchgangsöffnung ist so ausgestaltet, dass zumindest an der zweiten Oberfläche des Basisteils die Hülse mit einem zylinderförmigen Hülsenteil eingesteckt werden kann. Die Hülse umfasst einen Führungskanal, der zur Führung des Bohrers dient.

Ein Vorteil des erfinderischen Verfahrens ist, dass die Bohrschablone mit einer herkömmlichen Bearbeitungsmaschine mit drei oder vier Achsen bearbeitet werden kann, die in vielen Zahnarztpraxen zur Verfügung steht. Eine Übersendung der Planungsdaten und eine zentrale Fertigung in einem dentalen Labor ist damit nicht mehr notwendig.

Ein weiterer Vorteil des erfinderischen Verfahrens ist, dass eine nachträgliche Korrektur der Auflagefläche in der Bearbeitungsmaschine durchgeführt werden kann, um die Lage und die Position der Hülse relativ zum Basisteil zu korrigieren. Eine solche Korrektur der Führungsbohrungen kann bei herkömmlichen Bohrschablonen nach der Herstellung der Führungsbohrungen nicht mehr durchgeführt werden. Eine Korrektur der Auflagefläche ist notwendig, falls man bei einer Überprüfung feststellt, dass die gemessenen Werte der Lage und Ausrichtung nicht den durch die Implantatplanung vorgegebenen Soll-Werten entsprechen. Bei herkömmlichen Bohrschablonen mit zylinderförmigen Durchgangsbohrungen ist eine solche Korrektur der Ausrichtung und der Lage der Führungsbohrungen nicht mehr möglich.

Vorteilhafterweise kann in einem weiteren Schritt die Hülse an der zweiten Oberfläche des Basisteils in die Durchgangsöffnung gesteckt werden bis das Auflageteil mit der Auflagefläche des Basisteils in Kontakt kommt, wobei anschließend die Hülse mittels eines Klebeverfahrens am Basisteil fixiert werden kann.

Dadurch wird die Hülse in die Durchgangsöffnung gesteckt bis der scheibenförmige Auflageteil der Hülse mit beispielsweise einer ringförmigen Auflagefläche des Basisteils in Kontakt kommt. Anschließend werden die Hülsen durch das Kleben fest mit dem Basisteil verbunden. Dadurch wird die erfinderische Bohrschablone fertiggestellt. Vor dem Klebevorgang der Hülsen an das Basisteil kann eine Überprüfung der Lage und Ausrichtung der Hülsen relativ zum Basisteil durchgeführt werden und falls erforderlich eine Korrektur der Auflagefläche durchgeführt werden.

Die erfinderische Bohrschablone kann mehrere Durchgangsöffnungen mit mehreren schief zueinander ausgerichteten Hülsen aufweisen.

Vorteilhafterweise kann am Basisteil auf der zweiten Oberfläche ein Anschlag herausgearbeitet werden, der so ausgebildet ist, dass das Auflageteil der Hülse im eingesteckten Zustand seitlich bezüglich einer Achse der Hülse durch den Anschlag begrenzt ist.

Dadurch kann beispielsweise mittels der limitierten Bearbeitungsmaschine der Anschlag herausgeschliffen bzw. herausgefräst werden. Der Anschlag kann beispielsweise als eine Abstufung ausgestaltet sein, die beispielsweise als Gegenstück zu einem scheibenförmigen Hülsenteil ausgebildet ist. Die Achse der Hülse kann die Symmetrieachse sein, die mit einer Achse des Führungskanals der Hülse übereinstimmt.

Vorteilhafterweise kann zum Ausarbeiten der Auflagefläche und der Durchgangsöffnung ein CAM-Verfahren unter Verwendung eines Schleifwerkzeugs und/oder eines Fräswerkzeugs verwendet werden.

Dadurch kann zur Durchführung des erfinderischen Verfahrens eine herkömmliche CAM-Bearbeitungsmaschine mit einem Schleifwerkzeug oder einem Fräswerkzeug verwendet werden. Solche Bearbeitungsmaschinen stehen bereits in vielen Zahnarztpraxen zur Verfügung, so dass die Herstellung der Bohrschablone direkt in der Zahnarztpraxis durchgeführt werden kann.

Vorteilhafterweise kann eine Bearbeitungsmaschine mit drei oder vier Bearbeitungsachsen verwendet werden.

Dadurch kann die erfinderische Bohrschablone mittels einer limitierten Bearbeitungsmaschine lediglich mit drei oder vier Bearbeitungsachsen hergestellt werden. Vorteilhafterweise kann die Hülse unter Verwendung einer Bearbeitungsmaschine mit mindestens fünf Bearbeitungsachsen vorgefertigt werden. Die Hülse kann auch unter Verwendung eines sonstigen Herstellungsverfahrens, wie durch Sintern, vorgefertigt werden. Es kann auch ein Sortiment mit mehreren Hülsen für unterschiedliche Bohrer zur Durchführung dieses Verfahrens vorgefertigt werden.

Vorteilhafterweise können bestimmte Bereiche des Abdrucks herausgearbeitet werden, wobei andere Bereiche des Abdrucks unbearbeitet bleiben können und als Auflagebereiche des Basisteils dienen können.

Bei diesem Verfahrensschritt wird insbesondere der Abdruck der Präparation soweit aufgeweitet, dass bestimmte Auflagebereiche übrig bleiben, sodass damit sichergestellt ist, die Bohrschablone sich passgenau auf die Präparationsstelle aufsetzen lässt und an den vorgesehen Auflagebereichen mit dem Restzahnbestand in Kontakt tritt.

Bei der Planung der Auflagefläche des Basisteils kann auch die geplante Tiefe der Implantatbohrung berücksichtigt werden, wobei die eingesetzte Hülse als Tiefenanschlag dient. Alternativ dazu kann in der Bearbeitungsmaschine ein separater Tiefenanschlag herausgefräst werden, der die Eindringtiefe des Bohrers bestimmt.

Vorteilhafterweise kann die aufgeweitete Durchgangsöffnung kegelförmig herausgearbeitet werden, wobei sie an der ersten Oberfläche einen ersten Radius und an der zweiten Oberfläche des Basisteils einen zweiten Radius aufweisen kann. Die Hülse kann dabei ein scheibenförmiges erstes Hülsenteil und ein zylinderförmiges zweites Hülsenteil mit einem Führungskanal aufweisen. Der zweite Radius der Durchgangsöffnung an der zweiten Oberfläche des Basisteils kann dabei an das zylinderförmige zweite Hülsenteil angepasst werden, wobei der zweite Radius der Durchgangsöffnung mindestens so groß geformt werden kann wie ein Radius des zweiten Hülsenteils.

Dadurch kann die aufgeweitete Durchgangsöffnung kegelförmig in der Bearbeitungsmaschine herausgefräst werden, wobei der zweite Radius der Durchgangsöffnung an der zweiten Oberfläche des Basisteils möglichst dem Radius des zylinderförmigen zweiten Hülsenteils entsprechen sollte, um die Hülse im eingesteckten Zustand seitlich zu fixieren. Im eingesteckten Zustand kann daher die Lage und Ausrichtung des Hülsenteils mittels der Ausgestaltung der aufgeweiteten Durchgangsöffnung, des Anschlags und der Anlagefläche beeinflusst werden. Die nachfolgend beschriebene Vorrichtung zur Überprüfung der hergestellten Bohrschablone ist nicht Gegenstand der Erfindung. Die Bohrschablone weist dabei mindestens einen Führungskanal auf. Die Vorrichtung weist mindestens einen Stift und eine Platte auf, wobei der Stift in den Führungskanal einsteckbar ist. Die Platte ist in einem einstellbaren Abstand oberhalb der Bohrschablone angeordnet und Markierungen sind auf der Platte zum Ablesen einer Position vorgesehen. Der Stift, die Platte und die zu überprüfende Bohrschablone sind so ausgestaltet und sind so zueinander angeordnet, dass der Stift auf eine Position auf der Platte zeigt, die mittels der Markierungen auf der Platte ablesbar ist.

Im Vergleich zu einem bekannten Validierungsverfahren, bei dem Stifte in Führungsbohrungen einer Bohrschablone hineingesteckt werden und anschließend geprüft wird, ob die unteren Enden der Stifte mit Markierungen auf einen aufgedruckten Kontrollblatt übereinstimmen, hat dieses Verfahren den Vorteil, dass ein Ausdruck eines Kontrollblatts nicht erforderlich ist.

Ein weiterer Vorteil ist, dass diese Vorrichtung eine präzisere Überprüfung der Lage und der Neigung des Führungskanals ermöglicht, da bei einer Überprüfung mit einem Kontrollblatt die Bohrschablone auf das Kontrollblatt gelegt wird, so dass die Abstände zwischen den Führungsbohrungen und dem Kontrollblatt zu gering sind, um Abweichungen der Neigung und der Lage der Führungsbohrungen zuverlässig festzustellen. Bei der vorliegenden Vorrichtung können die Stifte in ihren Abmessungen solang gestaltet sein, dass der Abstand zwischen der Bohrschablone und der Platte groß genug ist, um eine zuverlässige Vermessung der Neigung und der Lage der Führungskanäle zu gewährleisten.

Vorteilhafterweise kann die Platte eine Glasplatte sein, die in einem bestimmten Abstand zur Bohrschablone so anordenbar ist, dass sie eine obere Spitze des Stifts berührt, wobei unter Verwendung der Markierungen auf der Platte die Position der oberen Spitze des Stifts ablesbar ist.

Die hergestellte Bohrschablone kann einen Führungskanal oder mehrere Führungskanäle für mehrere Implantatbohrungen aufweisen. Für jeden der Führungskanäle wird eine einsteckbare Hülse auf dem Basisteil positioniert und mit diesem fest verklebt. Die Koordinaten der Position des Stifts auf der Platte können abgelesen werden und daraus kann die genaue Neigung und Lage des jeweiligen Führungskanals bestimmt werden.

Vorteilhafterweise kann alternativ die Platte aus einem teiltransparenten Material gefertigt sein. Der Stift kann einen entlang einer Achse des Stifts ausgerichteten Laser aufweisen, der einen Lichtpunkt auf die Platte projiziert, so dass wenn der Stift in den Führungskanal eingesteckt ist der Laser des Stifts auf eine Position auf der Platte zeigt, die mittels der Markierungen auf der Platte ablesbar ist.

Bei dieser alternativen Ausführungsform muss die Platte nicht mit der oberen Spitze des Stifts in Kontakt gebracht werden, um die Position abzulesen. Dadurch kann der Abstand zwischen der Platte und der Bohrschablone beliebig eingestellt werden.

Vorteilhafterweise können die Markierungen auf der Platte ein Koordinatenkreuz mit einer x-Achse und einer y-Achse darstellen.

Dadurch können konkrete Koordinaten auf dem Koordinatenkreuz abgelesen werden.

Vorteilhafterweise kann die Vorrichtung eine Auflage aufweisen, die passend zu einem Auflagebereich der Bohrschablone ausgestaltet ist, wobei die Lagebeziehung zwischen dem Auflagebereich der Bohrschablone und dem Führungskanal sowie zwischen der Auflage und der Platte bekannt ist.

Dadurch wird eine genaue Positionierung der Bohrschablone relativ zur Vorrichtung ermöglicht.

Vorteilhafterweise kann die Vorrichtung eine Lupe aufweisen, die oberhalb der Platte angeordnet ist und zum Ablesen der Markierungen auf der Platte dient.

Dadurch können die Markierung auf der Platte vergrößert dargestellt werden, um eine bessere Ablesbarkeit zu gewährleisten. Die obere Spitze des Stifts kann konisch ausgestaltet sein, um die Position der oberen Spitze auf der Platte eindeutig bestimmen zu können. Das untere Ende des Stifts kann beliebig gestaltet sein.

Vorteilhafterweise kann der Stift zylinderförmig ausgebildet sein, wobei wenn der Stift in den Führungskanal gesteckt ist ein unteres Ende des Stifts eine Grundplatte der Vorrichtung berührt.

Bei dieser Ausführungsform des Stifts kann beispielsweise unter Verwendung einer Konstruktionssoftware anhand der Länge des Stifts, des Abstands zwischen der Grundplatte und der Platte sowie anhand der Koordinaten der oberen Spitze des Stifts die Neigung und die Lage des Führungskanals berechnet werden.

Vorteilhafterweise kann der Stift im mittleren Bereich ein kegelförmiges Auflageteil aufweisen, das im eingesteckten Zustand auf der Bohrschablone auffliegt.

Bei dieser alternativen Ausführungsform berührt das untere Ende des Stifts nicht die Grundplatte der Vorrichtung. Der Stift liegt im eingesteckten Zustand mit dem Auflageteil auf der eingesteckten Hülse auf. Dadurch können beispielsweise mittels einer Konstruktionssoftware anhand des bekannten Abstands zwischen dem Auflageteil und der oberen Spitze des Stifts sowie anhand der Koordinaten der oberen Spitze auf der Platte die Lage und die Neigung des Führungskanals berechnet werden.

Bei dieser Ausführungsform kann auch eine zu erwartende Eindringtiefe des Bohrers überprüft werden, wobei das untere Teil des Stifts in seinen Abmessungen so gestaltet ist, dass der Abstand zwischen der unteren Spitze des Stifts und dem Auflageteil der Eindringtiefe des Bohrers entspricht. Das nachfolgend beschriebene Verfahren zur Überprüfung einer Bohrschablone unter Verwendung der oben genannten Vorrichtung ist nicht Gegenstand der Erfindung. Die zu überprüfende Bohrschablone wird in einer bekannten Lagebeziehung zur Vorrichtung positioniert, wobei der Stift in den Führungskanal eingesteckt wird. Die Platte in einem bestimmten Abstand zur Bohrschablone angeordnet wird, wobei eine Position auf der Platte, auf die der Stift zeigt, unter Verwendung der Markierungen abgelesen wird.

Im Vergleich zum bekannten Verfahren mit dem Kontrollblatt hat das vorliegende Verfahren den Vorteil, dass kein Kontrollblatt ausgedruckt werden muss und die Neigung und die Lage des Führungskanals präziser festgestellt werden kann. Dadurch werden die genauen Koordinaten der Position auf der Platte bestimmt. Dadurch wird die Bohrschablone in Ihrer Lage relativ zur Überprüfungsvorrichtung positioniert. Vorteilhafterweise kann die Platte in einem bestimmten Abstand zur Bohrschablone so angeordnet werden, dass sie eine obere Spitze des Stifts berührt, wobei unter Verwendung der Markierungen auf der Platte die Position der oberen Spitze des Stifts abgelesen wird.

Dadurch kann die Position der Stiftspitze auf der Platte auf eine einfache Weise bestimmt werden.

Vorteilhafterweise kann unter Verwendung der abgelesenen Koordinaten der Position der oberen Spitze des Stifts auf der Platte und unter Verwendung der eingestellten Höhe der Platte relativ zur Bohrschablone die Ausrichtung und die Lage des Führungskanals überprüft werden.

Dadurch kann die Ausrichtung und Lage des Führungskanals auf eine einfache Weise überprüft werden.

Vorteilhafterweise können unter Verwendung einer Konstruktionssoftware für die Bohrschablone Soll-Werte für die Koordinaten der oberen Spitze des Stifts auf der Platte und für die Höhe der Platte berechnet werden, wobei anschließend die Soll-Werte mit den abgelesenen Ist-Werten verglichen werden.

Dadurch erfolgt die Berechnung der Soll-Werte computergestützt unter Berücksichtigung der geplanten Führungsbohrungen automatisch. Die abgelesenen Ist-Werte können daher auf eine einfache Art und Weise mit den berechneten Soll-Werten verglichen werden. Die abgelesenen Ist-Werte können in eine Eingabemaske der Konstruktionssoftware eingegeben werden wobei anschließend die tatsächliche Abweichung der Neigung und der Lage des Führungskanals berechnet wird.

Vorteilhafterweise kann die Platte aus einem teiltransparenten Material gefertigt sein. Der Stift kann einen entlang einer Achse des Stifts ausgerichteten Laser aufweisen, der einen Lichtpunkt auf die Platte projiziert, wobei der Laser des eingesteckten Stifts auf eine Position auf der Platte zeigt, die mittels der Markierungen auf der Platte abgelesen wird.

Dadurch kann die Position auf die der Stift zeigt auf eine einfache Art und Weise mittels des Lasers bestimmt werden. Dabei kann die Platte in einen beliebigen Abstand zu Bohrschablone angeordnet werden.

Vorteilhafterweise kann unter Verwendung der abgelesenen Koordinaten der Position auf der Platte, auf die der Laser zeigt, und unter Verwendung der eingestellten Höhe der Platte relativ zur Bohrschablone die Ausrichtung und die Lage des Führungskanals überprüft werden.

Dadurch ist eine genaue Überprüfung des Führungskanals gewährleistet.

Vorteilhafterweise können die Markierungen auf der Platte ein Koordinatenkreuz mit einer x-Achse und einer y-Achse darstellen, wobei eine x-Koordinate und eine y-Koordinate der Position der oberen Spitze durch einen Benutzer abgelesen werden.

Dadurch können konkrete Koordinaten der Position abgelesen werden. Alternativ kann auch eine optische Abtastung der Markierungen mittels eines optischen Sensors durchgeführt werden.

Vorteilhafterweise kann die Bohrschablone mit einem Auflagebereich der Bohrschablone auf eine passend geformte Auflage der Vorrichtung gelegt werden.

Dadurch kann die Bohrschablone in einer bestimmten Lagebeziehung relativ zur Vorrichtung präzise positioniert werden.

Vorteilhafterweise kann die Bohrschablone eine Lupe aufweisen, wobei die Markierungen auf der Platte mittels der Lupe durch einen Benutzer abgelesen werden kann.

Dadurch können die Markierungen auf der Platte zur besseren Ablesbarkeit vergrößert dargestellt werden.

### Kurzbeschreibung der Zeichnungen

Die Erfindung wird anhand der Zeichnungen erläutert. Es zeigt, die
- Fig. 1: eine Skizze einer Bohrschablone mit mehreren Hülsen;
- Fig. 2: eine Skizze eines Ausschnitts der Bohrschablone;
- Fig. 3: eine Skizze eines Ausschnitts der Bohrschablone aus Fig. 1 und Fig. 2 in der Draufsicht;
- Fig. 4: eine Skizze einer Vorrichtung zur Überprüfung der Bohrschablone aus Fig. 1 und Fig. 2, welche Vorrichtung nicht Gegenstand der Erfindung ist;
- Fig. 5: eine Skizze einer alternativen Ausführungsform der Überprüfungsvorrichtung, welche alternative Ausführungsform nicht Gegenstand der Erfindung ist;
- Fig. 6: eine Skizze einer CAM-Bearbeitungsmaschine mit drei Bearbeitungsachsen;
- Fig. 7: eine Skizze einer alternativen Vorrichtung zur Überprüfung der Bohrschablone mit einem Laser, welche alternative Vorrichtung nicht Gegenstand der Erfindung ist.

### Ausführungsbeispiel

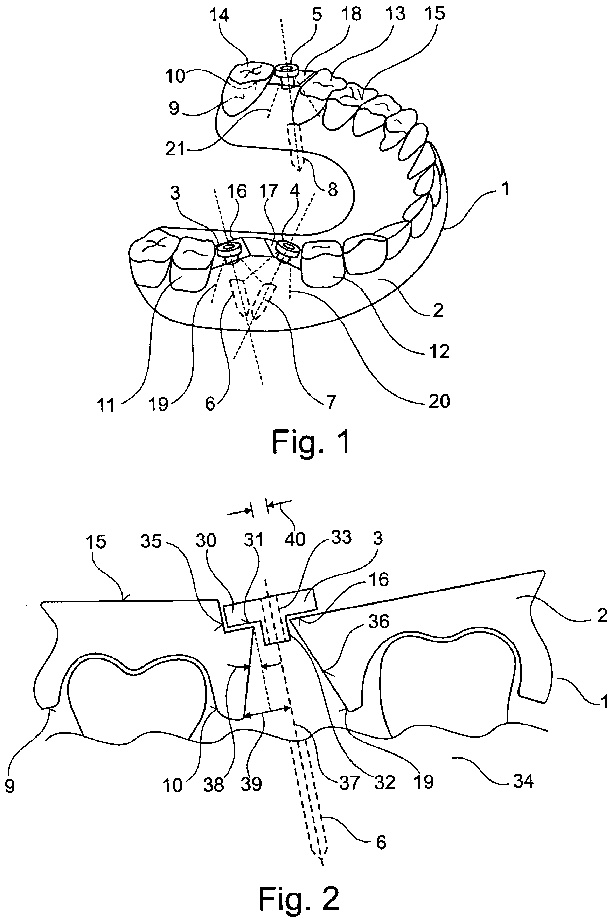

Die Fig. 1 zeigt eine Skizze einer Bohrschablone 1 umfassend ein Basisteil 2 und eine erste Hülse 3, eine zweite Hülse 4 und eine dritte Hülse 5 zur Durchführung einer ersten Implantatbohrung 6 einer zweiten Implantatbohrung 7 und einer dritten Implantatbohrung 8. Eine erste Oberfläche 9 der Basisteils 2 weist einen Abdruck 10 einer Präparationsstelle auf. In der dargestellten Ausführungsform umfasst die Bohrschablone den Abdruck 10 des gesamten unteren Kiefers eines Patienten. Die Bohrschablone 1 kann jedoch auch nur für einen Teil des Kiefers gefertigt werden oder lediglich Auflagepunkte zum Abstützen an den Nachbarzähnen 11, 12, 13 und 14. Eine zweite Oberfläche 15 des Basisteils 2 weist eine erste Auflagefläche 16, eine zweite Auflagefläche 17 und eine dritte Auflagefläche 18 auf. Das Basisteil 2 weist auch eine ausgehend von der zweiten Oberfläche 15 zur ersten Oberfläche 9 hin aufgeweitete erste Durchgangsöffnung 19, zweite Durchgangsöffnung 20 und dritte Durchgangsöffnung 21 auf. Die Hülsen 3, 4 und 5 sind in die Durchgangsöffnungen 19, 20 und 21 mit einem zylinderförmigen Hülsenteil eingesteckt und liegen mit einem scheibenförmigen Hülsenteil auf den Auflageflächen 16, 17 und 18 auf, so dass die Lage und die Ausrichtung der Hülsen 3, 4 und 5 durch die Verkippung und die Lage der Auflageflächen 16, 17 und 18 sowie durch die Lage der Durchgangsöffnungen 19, 20 und 21 festgelegt ist. Die Hülsen 3, 4 und 5 sind fest mit den Auflageflächen 16, 17 und 18 verklebt. Die aufgeweiteten Durchgangsöffnungen 19, 20 und 21 sind kegelförmig.

Die Fig. 2 zeigt eine Skizze eines Ausschnitts der Bohrschablone 1 aus Fig. 1, umfassend das Basisteil 2 und die Hülse 3. Die erste Oberfläche 9 des Basisteils 2 weist den Abdruck 10 auf, wobei die zweite gegenüberliegende Oberfläche 15 des Basisteils 2 die erste Auflagefläche 16 aufweist. Die Hülse 3 weist ein erstes scheibenförmiges Teil 30, das mit einem Auflagebereich 31 auf der Auflagefläche 16 aufliegt, und ein zweites zylinderförmiges Hülsenteil 32 auf, das in die erste aufgeweitete Durchgangsöffnung 19 eingesteckt ist. Die Hülse 3 weist einen Führungskanal 33 auf, der zur Führung eines Bohrers bestimmt ist, um die Implantatbohrung 6 im Kiefer 34 eines Patienten durchzuführen. Das Basisteil 2 weist einen Anschlag 35 in Form einer Abstufung mit einem rechten Winkel auf, der das erste scheibenförmige Hülsenteil 30 in seitlicher Richtung fixiert. Der Anschlag 35 kann als Gegenstück zum scheibenförmigen Hülsenteil 30 ausgebildet sein. Der Anschlag kann auch als eine gerade Ebene mit einem oder mit mehreren Anschlagspunkten an die Hülse ausgebildet sein. Die aufgeweitete Durchgangsöffnung 19 weist eine Mantelfläche 36 auf, die zu einer Achse 37 der Hülse 3 und damit der Implantatbohrung 6 einen Öffnungswinkel 38 aufweist, der im vorliegenden Fall 20° beträgt. Die erste Durchgangsöffnung 19 ist kegelförmig und weist einen ersten Radius 39 an der ersten Oberfläche 9 und einen zweiten Radius 40 an der zweiten Oberfläche 15 des Basisteils 2 auf. Die Durchgangsöffnung 19 wird mittels einer CAM-Bearbeitungsmaschine so herausgeschliffen, dass der zweite Radius 40 möglichst dem Radius des zweiten zylinderförmigen Hülsenteils 32 entspricht. Dadurch wird die Hülse im eingesteckten Zustand durch die Durchgangsöffnung 19, den Anschlag 35 und durch die Auflagefläche 16 in ihrer Lage und Ausrichtung fixiert.

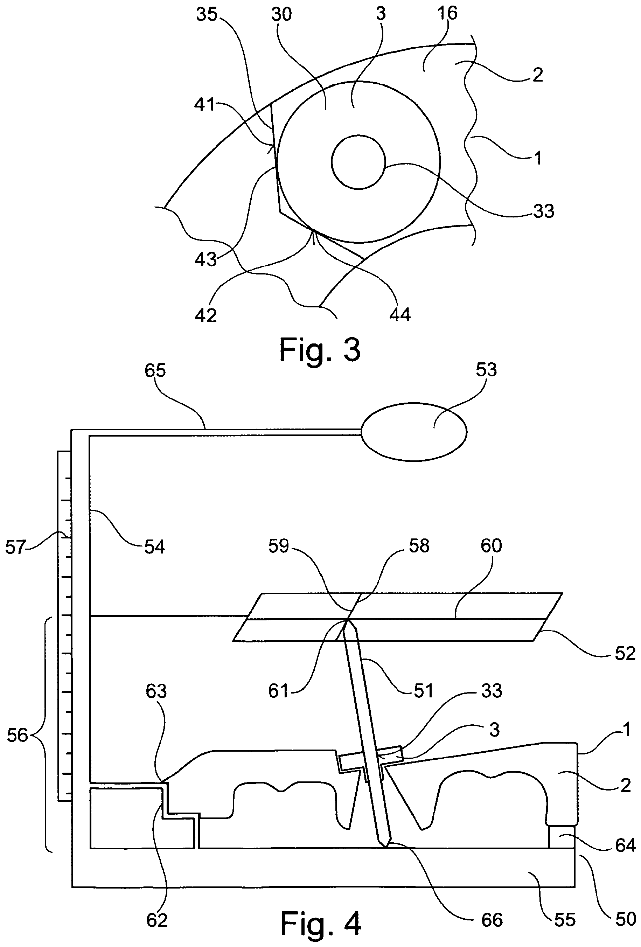

Die Fig. 3 zeigt eine Skizze eines Ausschnitts der Bohrschablone 1 aus Fig. 1 und Fig. 2 in der Draufsicht. Das scheibenförmige erste Hülsenteil 30 der Hülse 3 weist den zylinderförmigen Führungskanal 33 auf. Das scheibenförmige Hülsenteil 30 liegt auf der Auflagefläche 16, die als eine schräge Ebene ausgebildet ist, auf. Als Anschlag 35 dienen zwei gerade Ebenen 41 und 42 mit einem ersten Anschlagspunkt 43 und einem zweiten Anschlagspunkt 44.

Die Fig. 4 zeigt eine Skizze einer Vorrichtung 50 zur Überprüfung der Bohrschablone 1 aus Fig. 1 und Fig. 2, welche Vorrichtung nicht Gegenstand der Erfindung ist, umfassend das Basisteil 2 und die Hülse 3 mit dem Führungskanal 33. Die Vorrichtung 50 weist einen Stift 51, eine Glasplatte 52 und eine Lupe 53 auf. Die Glasplatte 52 ist an einer Halter 54 die mit einer Grundplatte 55 verbunden ist, befestigt. Ein Abstand 56 zwischen der Glasplatte 52 und der Grundplatte 55 ist verstellbar und kann unter Verwendung der Messskala 57 abgelesen werden. Die Glasplatte 52 weist ein Koordinatenkreuz 58 mit einer x-Achse 59 und einer y-Achse 60 auf, so dass die genaue Position einer oberen Spitze 61 des Stifts 51 auf der Glasplatte 52 abgelesen werden kann.

Die Vorrichtung weist eine Auflage 62 auf, die in Form einer Abstufung zwischen der Grundplatte 55 und der Halterung 54 ausgestaltet ist. An der Bohrschablone ist ein Auflagebereich 63 vorgesehen, der in seiner Form der Auflage 62 entspricht. Am anderen Ende liegt die Bohrschablone 1 auf einer zweiten Auflage 64 auf. Die Lupe 53 ist an der Halterung 54 über ein Verstellmittel 65 so angebracht, dass die Lupe in ihrer Position verstellt werden kann, um die Position der oberen Spitze 61 des Stifts 51 vergrößert zu betrachten. Das Verfahren zur Überprüfung der Bohrschablone 1 läuft in mehreren Verfahrensschritten ab. Im ersten Verfahren wird der Stift 51 in die Hülse 3 hineingesteckt, wobei eine untere Spitze 66 des Stifts 51 die Grundplatte 55 berührt. Im zweiten Schritt wird der Abstand 56 der Glasplatte 52 so verstellt, dass die obere Spitze 61 die Glasplatte 52 berührt. Im dritten Schritt werden die Koordinaten der Position der oberen Spitze 61 unter Verwendung der x-Achse 59 und y-Achse 60 abgelesen. Im vierten Schritt wird anhand der abgelesenen Koordinaten und des Abstands 56 die Neigung und die Lage des Führungskanals 33 der Hülse 3 berechnet. Die gemessenen Ist-Werte können dann mit Soll-Werten, die mittels einer Konstruktionssoftware berechnet wurden, verglichen werden.

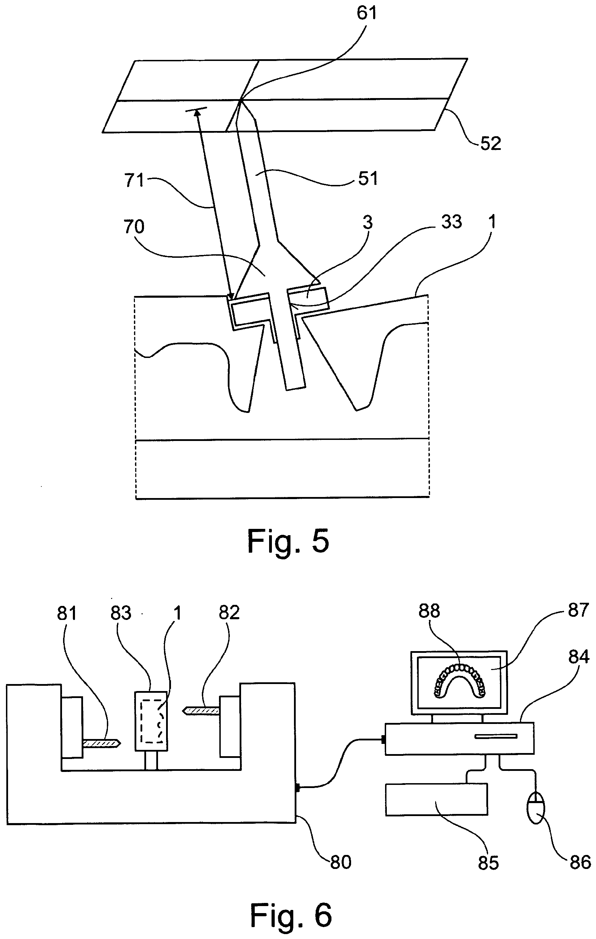

Die Fig. 5 zeigt eine Skizze einer alternativen Ausführungsform der Überprüfungsvorrichtung, welche alternative Ausführungsform nicht Gegenstand der Erfindung ist. Der Unterschied zur Vorrichtung nach Fig. 4 besteht darin, dass der Stift 51 im mittleren Bereich ein kegelförmiges Auflageteil 70 aufweist, das im eingesteckten Zustand auf der Hülse 3 aufliegt. Die Länge 71 des oberen Teils zwischen der oberen Spitze 61 und dem Auflageteil 70 ist bekannt und wird zusammen mit den Koordinaten der Position der oberen Spitze auf der Glasplatte 51 zur Berechnung der Neigung und der Lage des Führungskanals 33 verwendet.

Die Fig. 6 zeigt eine Skizze einer CAM-Bearbeitungsmaschine 80 mit drei Bearbeitungsachsen, umfassend ein erstes Fräswerkzeug 81 und ein zweites Fräswerkzeug 82, die gesteuert durch einen Computer 84 aus einem Rohling 83 die oben genannte Bohrschablone 1 aus Fig.1 bis Fig. 5 herausschleifen, die gestrichelt dargestellt ist. Der Computer 84 weist Eingabegeräte, wie eine Tastatur 85 und eine Maus 86, auf, wie die Bedienung einer CAD-Software zur Inventarplanung ermöglicht. Der Computer 84 ist an einen Monitor 87 angeschlossen, der ein virtuelles Modell 88 der geplanten Bohrschablone 1 anzeigt. Die Bearbeitungsmaschine 80 kann auch vier Bearbeitungsachsen aufweisen. Nach den vorliegenden erfinderischen Verfahren kann die Bearbeitungsmaschine 80 mit limitierten Freiheitsgraden zur Herstellung einer beliebigen Bohrschablone auch mit windschiefen Führungskanälen verwendet werden. Nach herkömmlichen Verfahren muss dazu oft eine Bearbeitungsmaschine mit mindestens fünf Bearbeitungsachsen verwendet werden.

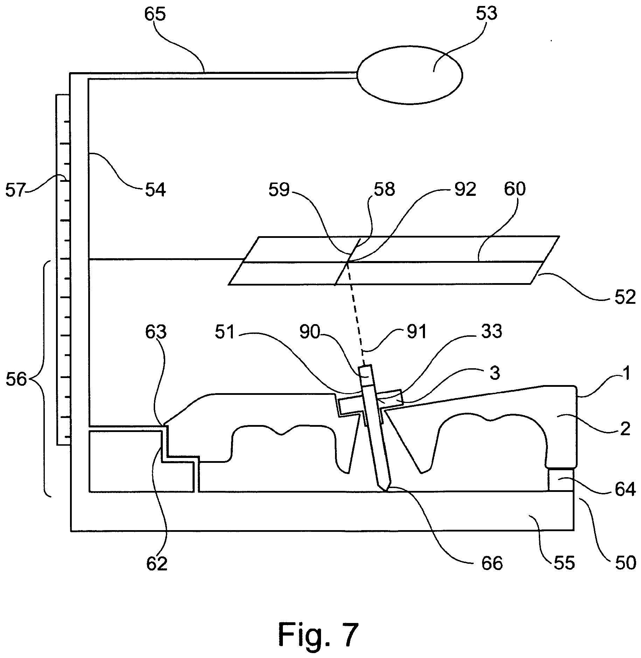

Die Fig. 7 zeigt eine Skizze einer zur Vorrichtung 50 aus Fig. 4 alternativen Vorrichtung zur Überprüfung der Bohrschablone 1 aus Fig. 1 und Fig. 2, welche alternative Vorrichtung nicht Gegenstand der Erfindung ist. Der Unterschied zur Vorrichtung 50 aus Fig. 4 besteht darin, dass die Platte 52 aus einem teiltransparenten Material gefertigt ist und dass der Stift 51 einen entlang einer Achse des Stifts ausgerichteten Laser 90 aufweist, der einen Laserstrahl 91 aussendet einen Lichtpunkt 92 auf die Platte 52 projiziert, wobei der Laser des eingesteckten Stifts 51 auf eine Position 91 auf der Platte 52 zeigt, die mittels der Koordinatenachsen 59, 60 auf der Platte 52 abgelesen wird. Unter Verwendung der abgelesenen Koordinaten der Position 92 auf der Platte 52, auf die der Laser 90 zeigt, und unter Verwendung der eingestellten Höhe 56 der Platte 52 relativ zur Bohrschablone 81 wird die Ausrichtung und die Lage des Führungskanals 33 ermittelt und überprüft.

## Patentansprüche

1. Bohrschablone (1) zur Durchführung einer Implantatbohrung (6, 7, 8) für ein dentales Implantat umfassend ein Basisteil (2) mit mindestens einer Durchgangsöffnung (19, 20, 21) und mindestens einer Hülse (3, 4, 5), wobei eine erste Oberfläche (9) des Basisteils (2) einen Abdruck (10) einer Präparationsstelle aufweist, wobei eine zweite gegenüberliegende Oberfläche (15) des Basisteils eine Auflagefläche (16, 17, 18) aufweist, wobei die Durchgangsöffnung (19, 20, 21) und die Auflagefläche (16, 17, 18) des Basisteils (2) so geformt sind, dass die Hülse (3, 4, 5) in die Durchgangsöffnung (19, 20, 21) zumindest teilweise einsteckbar ist und die Hülse (3, 4, 5) in einem eingesteckten Zustand auf der Auflagefläche (16, 17, 18) aufliegt und in ihrer Lage und Ausrichtung relativ zum Basisteil (2) positioniert ist, **dadurch gekennzeichnet, dass** die Durchgangsöffnung (19, 20, 21) ausgehend von der zweiten Oberfläche (15) zur ersten Oberfläche (9) des Basisteils (2) hin aufgeweitet ist.

2. Bohrschablone (1) nach Anspruch 1, **dadurch gekennzeichnet, dass** das Basisteil (2) auf der zweiten Oberfläche (15) einen Anschlag (35) aufweist, der so ausgebildet ist, dass die Hülse (3, 4, 5) im eingesteckten Zustand auf der Auflagefläche (16, 17, 18) aufliegt und seitlich den Anschlag berührt.

3. Bohrschablone (1) nach Anspruch 1 oder 2, **dadurch gekennzeichnet, dass** eine Mantelfläche (36) der aufgeweiteten Durchgangsöffnung (19, 20, 21) zu einer Achse (37) der Hülse (3, 4, 5) im eingesteckten Zustand einen Öffnungswinkel bildet, der mindestens 15° beträgt.

4. Bohrschablone (1) nach einem der Ansprüche 1 bis 3, **dadurch gekennzeichnet, dass** die aufgeweitete Durchgangsöffnung (19, 20, 21) kegelförmig ist und an der ersten Oberfläche (9) einen ersten Radius (39) und an der zweiten Oberfläche (15) einen zweiten Radius (40) aufweist, wobei die Hülse (3, 4, 5) ein scheibenförmiges erstes Hülsenteil (30) und ein zylinderförmiges zweites Hülsenteil (32) mit einem Führungskanal (33) aufweist, wobei der zweite Radius (40) der Durchgangsöffnung (19, 20, 21) an der zweiten Oberfläche (15) des Basisteils (2) an das zylinderförmige zweite Hülsenteil (32) angepasst ist, wobei der zweite Radius (40) der Durchgangsöffnung (19, 20, 21) mindestens so groß wie ein Radius des zweiten Hülsenteils (32) ist.

5. Bohrschablone (1) nach einem der Ansprüche 1 bis 4, **dadurch gekennzeichnet, dass** die Hülse (3, 4, 5) ein drittes Hülsenteil mit einem Führungskanal (33) aufweist, das ausgehend von der Auflagefläche (16, 17, 18) in eine Richtung weg vom Basisteil (2) Ausgerichtet ist.

6. Bohrschablone (1) nach einem der Ansprüche 1 bis 5, **dadurch gekennzeichnet, dass** das Basisteil (2) unter Verwendung einer Bearbeitungsmaschine (80) mit drei oder vier Bearbeitungsachsen herstellbar ist.

7. Verfahren zur Herstellung einer zahnmedizinischen Bohrschablone (1), die ein Basisteil (2) mit mindestens einer Durchgangsöffnung (19, 20, 21) und mindestens eine Hülse (3, 4, 5) aufweist, wobei an einer ersten Oberfläche (9) des Basisteils (2) ein Abdruck (10) einer Präparationsstelle vorhanden ist, **dadurch gekennzeichnet, dass** an einer zweiten gegenüberliegenden Oberfläche (15) des Basisteils (2) eine Auflagefläche (16, 17, 18) ausgearbeitet wird, die passend zu einem Auflageteil (31) der Hülse (3, 4, 5) geformt wird, wobei eine Durchgangsöffnung (19, 20, 21) herausgearbeitet wird, die ausgehend von der zweiten Oberfläche (15) zur ersten Oberfläche (9) des Basisteils (2) hin aufgeweitet wird, wobei die Durchgangsöffnung (19, 20, 21) und die Auflagefläche (16, 17, 18) des Basisteils (2) so ausgearbeitet werden, dass die Hülse (3, 4, 5) in die Durchgangsöffnung (19, 20, 21) zumindest teilweise einsteckbar ist und die Hülse (3, 4, 5) in einem eingesteckten Zustand über das Auflageteil (31) auf der Auflagefläche (16, 17, 18) aufliegt und in ihrer Lage und Ausrichtung relativ zum Basisteil (2) positioniert ist.

8. Verfahren nach Anspruch 7, **dadurch gekennzeichnet, dass** die Hülse (3, 4, 5) an der zweiten Oberfläche (15) des Basisteils (2) in die Durchgangsöffnung (19, 20, 21) gesteckt wird bis das Auflageteil (31) mit der Auflagefläche (16, 17, 18) des Basisteils (2) in Kontakt kommt, wobei anschließend die Hülse (3, 4, 5) mittels eines Klebeverfahrens am Basisteil (2) fixiert wird.

9. Verfahren nach Anspruch 7 oder 8, **dadurch gekennzeichnet, dass** am Basisteil (2) auf der zweiten Oberfläche (15) ein Anschlag (35) herausgearbeitet wird, der so ausgebildet ist, dass das Auflageteil der Hülse (3, 4, 5) im eingesteckten Zustand seitlich bezüglich einer Achse (37) der Hülse durch den Anschlag (35) begrenzt ist.

10. Verfahren nach einem der Ansprüche 7 bis 9, **dadurch gekennzeichnet, dass** zum Ausarbeiten der Auflagefläche (16, 17, 18) und der Durchgangsöffnung (19, 20, 21) ein CAM-Verfahren unter Verwendung eines Schleifwerkzeugs und/oder eines Fräswerkzeugs verwendet wird.

11. Verfahren nach Anspruch 10, **dadurch gekennzeichnet, dass** eine Bearbeitungsmaschine (80) mit drei oder mit vier Bearbeitungsachsen verwendet wird.

12. Verfahren nach einem der Ansprüche 7 bis 11, **dadurch gekennzeichnet, dass** die Hülse (3, 4, 5) unter Verwendung einer Bearbeitungsmaschine mit mindestens fünf Bearbeitungsachsen vorgefertigt wird.

13. Verfahren nach einem der Ansprüche 7 bis 12, **dadurch gekennzeichnet, dass** bestimmte Bereiche des Abdrucks (10) herausgearbeitet werden, wobei andere Bereiche des Abdrucks (10) unbearbeitet bleiben und als Auflagebereiche des Basisteils (2) dienen.

14. Verfahren nach einem der Ansprüche 7 bis 13, **dadurch gekennzeichnet, dass** das Basisteil (2) so bearbeitet wird, dass die aufgeweitete Durchgangsöffnung (19, 20, 21) kegelförmig ist, wobei sie an der ersten Oberfläche (9) einen ersten Radius (39) und an der zweiten Oberfläche (15) des Basisteils (2) einen zweiten Radius (40) aufweist, wobei die Hülse (3, 4, 5) ein scheibenförmiges erstes Hülsenteil (30) und ein zylinderförmiges zweites Hülsenteil (32) mit einem Führungskanal (33) aufweist, wobei der zweite Radius (40) der Durchgangsöffnung (19, 20, 21) an der zweiten Oberfläche (15) des Basisteils (2) an das zylinderförmige zweite Hülsenteil (32) angepasst wird, wobei der zweite Radius (40) der Durchgangsöffnung (19, 20, 21) mindestens so groß geformt wird wie ein Radius (39, 40) des zweiten Hülsenteils (32).

## Claims

1. Drilling jig (1) for the implementation of an implant borehole (6, 7, 8) for a dental implant comprising a base part (2) with at least one through hole (19, 20, 21) and at least one sleeve (3, 4, 5), wherein a first surface (9) of the base part (2) comprises an impression (10) of a preparation site, wherein a second opposing surface (15) of the base part comprises a bearing surface (16, 17, 18), wherein the through hole (19, 20, 21) and the bearing surface (16, 17, 18) of the base part (2) are formed in such a way that the sleeve (3, 4, 5) can be at least partially inserted into the through hole (19, 20, 21) and, in an inserted state, the sleeve (3, 4, 5) rests on the bearing surface (16, 17, 18) and in its position and orientation is positioned relative to the base part (2), **characterized in that**, starting from the second surface (15), the through hole (19, 20, 21) is widened towards the first surface (9) of the base part (2).

2. Drilling jig (1) according to Claim 1, **characterized in that**, on the second surface (15), the base part (2) comprises a stop (35), which is configured in such a way that, in the inserted state, the sleeve (3, 4, 5) rests on the bearing surface (16, 17, 18) and is laterally in contact with the stop.

3. Drilling jig (1) according to Claim 1 or 2, **characterized in that** a lateral surface (36) of the widened through hole (19, 20, 21) forms an opening angle of at least 15° to an axis (37) of the sleeve (3, 4, 5) in the inserted state.

4. Drilling jig (1) according to any of Claims 1 to 3, **characterized in that** the widened through hole (19, 20, 21) is conical and comprises a first radius (39) on the first surface (9) and a second radius (40) on the second surface (15), wherein the sleeve (3, 4, 5) comprises a disc-shaped first sleeve part (30) and a cylindrical second sleeve part (32) with a guide channel (33), wherein the second radius (40) of the through hole (19, 20, 21) on the second surface (15) of the base part (2) is fitted to the cylindrical second sleeve part (32), wherein the second radius (40) of the through hole (19, 20, 21) is at least as large as a radius of the second sleeve part (32).

5. Drilling jig (1) according to any of Claims 1 to 4, **characterized in that** the sleeve (3, 4, 5) comprises a third sleeve part with a guide channel (33), which, starting from the bearing surface (16, 17, 18), is oriented in a direction away from the base part (2).

6. Drilling jig (1) according to any of Claims 1 to 5, **characterized in that** the base part (2) can be produced using a processing machine (80) with three or four processing axes.

7. Method for producing a dental drilling jig (1), which comprises a base part (2) with at least one through hole (19, 20, 21) and at least one sleeve (3, 4, 5), wherein an impression (10) of a preparation site is present on a first surface (9) of the base part (2), **characterized in that** a bearing surface (16, 17, 18) is prepared on a second opposing surface (15) of the base part (2), which is shaped so as to match a bearing part (31) of the sleeve (3, 4, 5), wherein a through hole (19, 20, 21) is carved out which, starting from the second surface (15), is widened towards the first surface (9) of the base part (2), wherein the through hole (19, 20, 21) and the bearing surface (16, 17, 18) of the base part (2) are prepared in such a way that the sleeve (3, 4, 5) can be at least partially inserted into the through hole (19, 20, 21) and, in an inserted state, the sleeve (3, 4, 5) rests on the bearing surface (16, 17, 18) via the bearing part (31) and in its position and orientation is positioned relative to the base part (2).

8. Method according to Claim 7, **characterized in that** the sleeve (3, 4, 5) is inserted into the through hole (19, 20, 21) on the second surface (15) of the base part (2) until the bearing part (31) comes into contact with the bearing surface (16, 17, 18) of the base part (2), wherein the sleeve (3, 4, 5) is subsequently fixed to the base part (2) by means of an adhesive method.

9. Method according to Claim 7 or 8, **characterized in that** a stop (35) is carved out on the base part (2) on the second surface (15), which is configured in such a way that, in the inserted state, the bearing part of the sleeve (3, 4, 5) is delimited laterally with respect to an axis (37) of the sleeve by the stop (35).

10. Method according to any of Claims 7 to 9, **characterized in that** a CAM method using a grinding tool and/or a milling tool is used to prepare the bearing surface(16, 17, 18) and the through hole (19, 20, 21).

11. Method according to Claim 10, **characterized in that** a processing machine (80) with three or four processing axes is used.

12. Method according to any of Claims 7 to 11, **characterized in that** the sleeve (3, 4, 5) is prefabricated using a processing machine with at least five processing axes.

13. Method according to any of Claims 7 to 12, **characterized in that** certain regions of the impression (10) are carved out, wherein other regions of the impression (10) remain unprocessed and serve as the bearing areas of the base part (2).

14. Method according to any of Claims 7 to 13, **characterized in that** the base part (2) is processed in such a way that the widened through hole (19, 20, 21) is conical, wherein it comprises a first radius (39) on the first surface (9) and a second radius (40) on the second surface (15) of the base part (2), wherein the sleeve (3, 4, 5) comprises a disc-shaped first sleeve part (30) and a cylindrical second sleeve part (32) with a guide channel (33), wherein the second radius (40) of the through hole (19, 20, 21) on the second surface (15) of the base part (2) is fitted to the cylindrical second sleeve part (32), wherein the second radius (40) of the through hole (19, 20, 21) is shaped to be at least as large as a radius (39, 40) of the second sleeve part (32) .

## Revendications

1. Gabarit de perçage (1) pour la réalisation d'un perçage pour implant (6, 7, 8) pour un implant dentaire, comprenant une partie de base (2) possédant au moins une ouverture de passage (19, 20, 21) et au moins un manchon (3, 4, 5) ; une première surface (9) de la partie de base (2) présentant une impression (10) d'une zone de préparation, une deuxième surface (15), opposée, de la partie de base présentant une surface d'appui (16, 17, 18), l'ouverture de passage (19, 20, 21) et la surface d'appui (16, 17, 18) de la partie de base (2) étant formées de manière que le manchon (3, 4, 5) puisse être au moins partiellement inséré dans l'ouverture de passage (19, 20, 21) et que le manchon (3, 4, 5) repose, dans un état inséré, sur la surface d'appui (16, 17, 18) et soit positionné et orienté eu égard à la partie de base (2), **caractérisé en ce que** l'ouverture de passage (19, 20, 21) est évasée entre la deuxième surface (15) et la première surface (9) de la partie de base (2).

2. Gabarit de perçage (1) selon la revendication 1, **caractérisé en ce que** la partie de base (2) présente une butée (35) sur la deuxième surface (15), laquelle est conçue de manière que le manchon (3, 4, 5), dans l'état inséré, repose sur la surface d'appui (16, 17, 18) et soit en contact latéral avec la butée.

3. Gabarit de perçage (1) selon la revendication 1 ou 2, **caractérisé en ce qu'**une surface d'enveloppe (36) de l'ouverture de passage (19, 20, 21) évasée forme, par rapport à un axe (37) du manchon (3, 4, 5) dans l'état inséré, un angle d'ouverture d'au moins 15°.

4. Gabarit de perçage (1) selon l'une des revendications 1 à 3, **caractérisé en ce que** l'ouverture de passage (19, 20, 21) évasée est conique et présente un premier rayon (39) au niveau de la première surface (9) et un deuxième rayon (40) au niveau de la deuxième surface (15) ; le manchon (3, 4, 5) présentant une première partie de manchon (30) en forme de disque et une deuxième partie de manchon (32) en forme de cylindre possédant un canal de guidage (33), le deuxième rayon (40) de l'ouverture de passage (19, 20, 21) étant adapté, au niveau de la deuxième surface (15) de la partie de base (2), à la deuxième partie de manchon (32) en forme de cylindre, ledit deuxième rayon (40) de l'ouverture de passage (19, 20, 21) étant de dimension au moins égale à un rayon de la deuxième partie de manchon (32).

5. Gabarit de perçage (1) selon l'une des revendications 1 à 4, **caractérisé en ce que** le manchon (3, 4, 5) présente une troisième partie de manchon possédant un canal de guidage (33) qui est orienté en partant de la surface d'appui (16, 17, 18) dans une direction s'éloignant de la partie de base (2).

6. Gabarit de perçage (1) selon l'une des revendications 1 à 5, **caractérisé en ce que** la partie de base (2) peut être fabriquée au moyen d'une machine d'usinage (80) à trois ou quatre axes d'usinage.

7. Procédé de fabrication d'un gabarit de perçage dentaire (1) présentant une partie de base (2) possédant au moins une ouverture de passage (19, 20, 21) et au moins un manchon (3, 4, 5) ; une impression (10) d'une zone de préparation étant présente au niveau d'une première surface (9) de la partie de base (2), **caractérisé en ce qu'**une surface d'appui (16, 17, 18) est élaborée au niveau d'une deuxième surface (15), opposée, de la partie de base (2), laquelle est formée pour être adaptée à une partie d'appui (31) du manchon (3, 4, 5), une ouverture de passage (19, 20, 21) étant définie en s'évasant depuis la deuxième surface (15) vers la première surface (9) de la partie de base (2), l'ouverture de passage (19, 20, 21) et la surface d'appui (16, 17, 18) de la partie de base (2) étant élaborées de manière que le manchon (3, 4, 5) puisse être au moins partiellement inséré dans l'ouverture de passage (19, 20, 21) et que le manchon (3, 4, 5), dans un état inséré, repose par le biais de la partie d'appui (31) sur la surface d'appui (16, 17, 18) et soit positionné et orienté eu égard à la partie de base (2).

8. Procédé selon la revendication 7, **caractérisé en ce que** le manchon (3, 4, 5) est inséré dans l'ouverture de passage (19, 20, 21) au niveau de la deuxième surface (15) de la partie de base (2) jusqu'à ce que la partie d'appui (31) vienne en contact avec la surface d'appui (16, 17, 18) de la partie de base (2), le manchon (3, 4, 5) étant ensuite fixé, au moyen d'un procédé de collage, à la partie de base (2).

9. Procédé selon la revendication 7 ou 8, **caractérisé en ce qu'**une butée (35) est définie au niveau de la partie de base (2) sur la deuxième surface (15), laquelle est formée de manière que la partie d'appui du manchon (3, 4, 5) soit limitée latéralement par la butée (35), dans l'état inséré, par rapport à un axe (37) du manchon.

10. Procédé selon l'une des revendications 7 à 9, **caractérisé en ce que**, pour l'élaboration de la surface d'appui (16, 17, 18) et de l'ouverture de passage (19, 20, 21), un processus de FAO est mis en oeuvre, en utilisant un outil abrasif et/ou un outil de fraisage.

11. Procédé selon la revendication 10, **caractérisé en ce qu'**on utilise une machine d'usinage (80) à trois ou quatre axes d'usinage.

12. Procédé selon l'une des revendications 7 à 11, **caractérisé en ce que** le manchon (3, 4, 5) est préfabriqué au moyen d'une machine d'usinage à au moins cinq axes d'usinage.

13. Procédé selon l'une des revendications 7 à 12, **caractérisé en ce que** des zones spécifiques de l'impression (10) sont élaborées, d'autres zones de l'impression (10) demeurant non usinées et servant de zones d'appui de la partie de base (2).

14. Procédé selon l'une des revendications 7 à 13, **caractérisé en ce que** la partie de base (2) est usinée de manière que l'ouverture de passage (19, 20, 21) évasée soit conique et qu'elle présente un premier rayon (39) au niveau de la première surface (9) et un deuxième rayon (40) au niveau de la deuxième surface (15) de la partie de base (2), le manchon (3, 4, 5) présentant une première partie de manchon (30) en forme de disque et une deuxième partie de manchon (32) en forme de cylindre possédant un canal de guidage (33), le deuxième rayon (40) de l'ouverture de passage (19, 20, 21) étant adapté, au niveau de la deuxième surface (15) de la partie de base (2), à la deuxième partie de manchon (32) en forme de cylindre, ledit deuxième rayon (40) de l'ouverture de passage (19, 20, 21) étant de dimension au moins égale à un rayon (39, 40) de la deuxième partie de manchon (32).
